# EUROPÄISCHE PATENTANMELDUNG

(11) **EP 1 238 618 A2**
(43) Veröffentlichungstag der Anmeldung: **11.09.2002**
(21) Anmeldenummer: 02004178.6
(22) Anmeldetag: 26.02.2002
(51) Int. Cl.: A47J 47/16

(54) **Vorrichtung zur Aufnahme von Dosen, insbesondere Gewürzdosen, Gläsern und ähnlichen Teilen aus Küche und Bad**

(30) Priorität: 01.03.2001 DE 20103595 U; 13.10.2001 DE 20116861 U
(71) Anmelder: HÖRTNAGL, Alexander, 6166 Fulpmes (AT)
(72) Erfinder: HÖRTNAGL, Alexander, 6166 Fulpmes (AT)
(74) Vertreter: WALTHER, WALTHER & HINZ Patentanwälte

(57) **Zusammenfassung**

Gegenstand der vorliegenden Erfindung ist eine Vorrichtung zur Aufnahme von Dosen, insbesondere Gewürzdosen, Gläsern und ähnlichen Teilen aus Küche und Bad mit einer tablettartige Aufnahme (10), wobei die Aufnahme (10) mit einem in einem Schrank oder Schrankteil (1) angeordneten verlängerbaren, insbesondere teleskopierbaren Arm (20) in Verbindung steht.

## Beschreibung

Die Erfindung betrifft eine Vorrichtung zur Aufnahme von Dosen, insbesondere Gewürzdosen, Gläsern und ähnlichen Teilen aus Küche und Bad.

Insbesondere in der Küche ist es häufig so, dass die Gewürzdosen unmittelbar neben dem Herd, beispielsweise auf einer Ablage an der Dunstabzugshaube positioniert sind. Vorteilhaft hierbei ist, dass diese Gewürzdosen unmittelbar in Reichweite zum Herd stehen. Nachteilig ist allerdings, dass die Dosen auf Grund von Fettschwaden sehr stark verschmutzen bzw. verfetten.

Es ist darüber hinaus bekannt, derartige Gewürzdosen in Schränken unterzubringen. Nachteilig hierbei ist, dass somit kein unmittelbarer Zugriff auf die Dosen besteht. Vorteilhaft hieran wiederum ist, dass die Dosen nicht verschmutzen. Darüber hinaus besteht bei der Unterbringung der Dosen in einem Auszugsschrank der weitere Nachteil, dass diese häufig nur von oben zugängig sind, so dass nicht genau erkennbar ist, welche Dose welches Gewürz enthält.

Der Erfindung liegt daher die Aufgabe zu Grunde, eine Vorrichtung zur Aufnahme von Dosen, insbesondere Gewürzsdosen, Gläsern und ähnlichen Teilen bereitzustellen, wobei gewährleistet sein soll, dass die Teile leicht zugänglich sind, und wobei darüber hinaus gewährleistet sein soll, dass eine Verschmutzung der Dosen weitgehend vermieden wird.

Die Aufgabe wird erfindungsgemäß durch eine tablettartige Aufnahme gelöst, wobei die Aufnahme mit einem in einem Schrankteil angeordneten verlängerbaren, insbesondere teleskopierbaren Arm in Verbindung steht, wobei die Aufnahme nach einer ersten Variante durch das Schrankteil aufnehmbar ist. Nach einer zweiten Variante ist die Aufnahme an den Schrank oder den Schrankteil ansetzbar, d. h. dass die Aufnahme eine ähnliche Kontur aufweist, wie der Schrank oder das Schrankteil, und die Aufnahme die Fortsetzung nach unten oder zur Seite an den Schrank bildet. Durch die Anordnung der Vorrichtung zur Aufnahme der Dosen, und insbesondere der Gewürzdosen in dem Schrank oder Schrankteil wird eine Verschmutzung der Dosen selbst vermieden. Lediglich zum Gebrauch der Dosen kann die gesamte Aufnahme auf Grund des verlängerbaren bzw. teleskopierbaren Armes aus dem Schrank oder Schrankteil entnommen werden bzw. von diesem weggeschwenkt werden, um nach Benutzung wieder im Schrank zu verschwinden bzw. am Schrank anzuliegen.

Im Einzelnen ist vorgesehen, dass die Aufnahme als Gewürzständer ausgebildet ist, wobei ein solcher Gewürzständer eine Bodenplatte und eine dazu nach oben beabstandete Halterung mit Bohrungen zur Aufnahme der Gewürzdosen aufweist. Generell ist es natürlich so, dass diese Aufnahme mit diesen Bohrungen nicht nur der Aufnahme der besagten Gewürzdosen dienen kann, sondern darüber hinaus auch der Aufnahme von Gläsern oder anderen dosenartigen Utensilien, beispielsweise Lippenstiften. Denkbar ist aber auch die Ausbildung der Aufnahme in Form eines Tabletts, wie eingangs beschrieben.

Nach einem besonders vorteilhaften Merkmal ist vorgesehen, dass die Aufnahme drehbar an dem verlängerbaren bzw. teleskopierbaren Arm angeordnet ist, um sich so einen besseren Überblick über die Lage der entsprechenden Dosen auf der Aufnahme zu verschaffen. Die Teleskopelemente des teleskopierbaren Armes stehen vorteilhaft durch Führungselemente, z. B. Kugellagerkäfige miteinander in Verbindung, um auch dann, wenn ein Moment auf den Arm wirkt, eine einwandfreie Funktionsweise ohne Verklemmen und Verkanten beim Auseinander- oder Zusammenschieben zu ermöglichen.

Insbesondere von Vorteil ist, wenn der teleskopierbare Arm eine Hubvorrichtung aufweist, beispielsweise in Form einer Gasfeder oder ähnlichem. Die Aufnahme würde in diesem Fall gegen die Kraft der Gasfeder nach unten gezogen und würde durch die Kraft der Gasfeder in der Stellung im Schrank verharren. Ohne eine solche Gasfeder ist eine Verriegelung im Schrank oder Schrankteil zur Fixierung der Aufnahme vorgesehen.

Anhand der Zeichnungen wird die Erfindung nachstehend beispielhaft näher erläutert.
- Figur 1: zeigt die erste Variante in einer Ansicht auf die erfindungsgemäße Vorrichtung schräg von oben;
- Figur 2: zeigt eine Ansicht schräg von unten auf die Vorrichtung;
- Figur 3: zeigt die zweite Variante in perspektivischer Darstellung;
- Figur 4: zeigt den Teleskoparm beider Varianten im Schnitt.

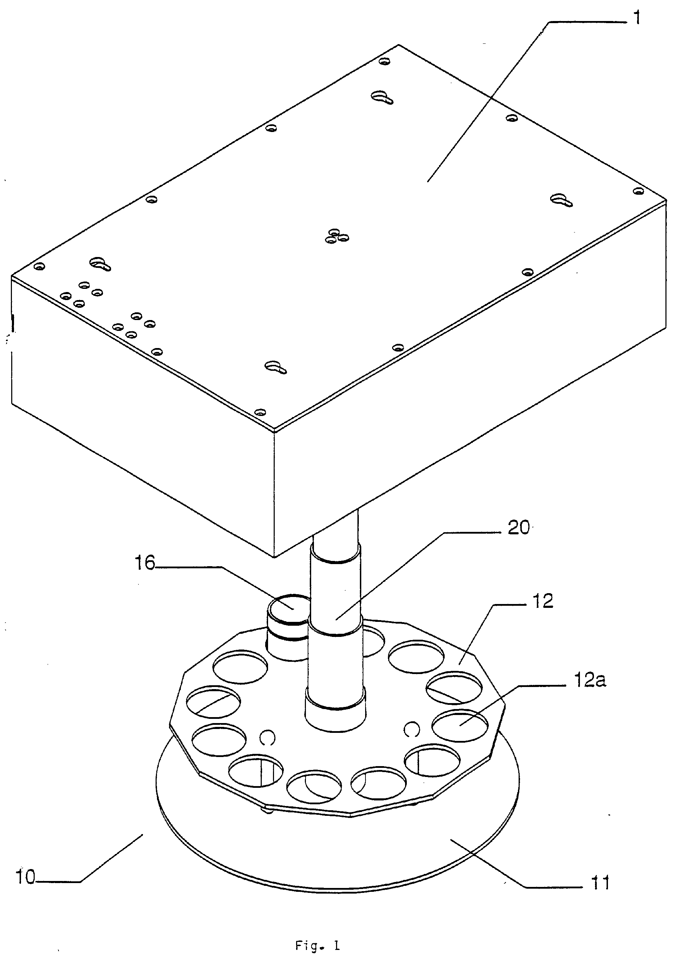

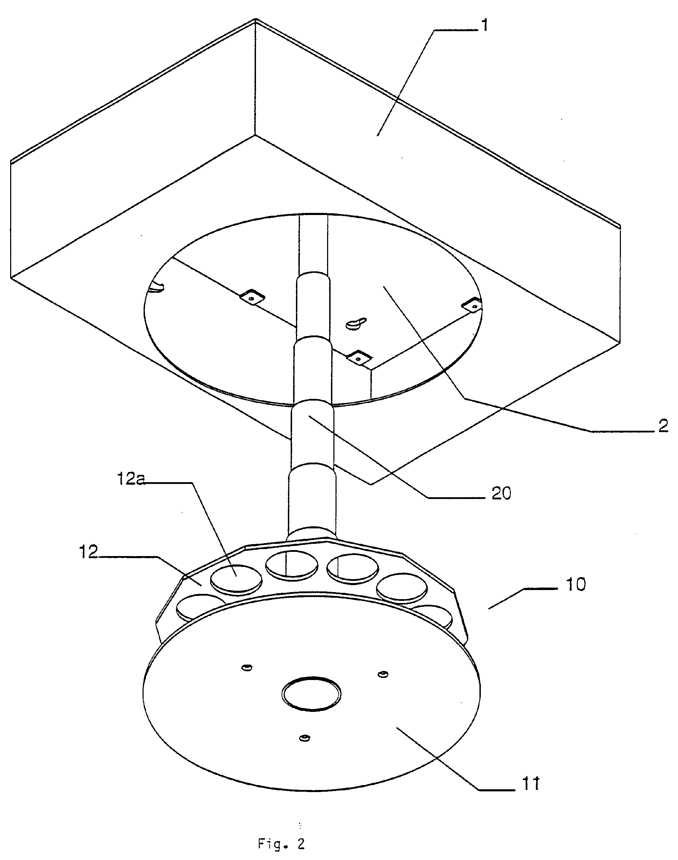

### Zu den Figuren 1 und 2:

Das insgesamt mit 1 bezeichnete Schrankteil weist eine Öffnung 2 auf, die in etwa der Größe der mit 10 bezeichneten Aufnahme für die Gewürzdosen entspricht. Die Aufnahme, im vorliegenden Fall bestehend aus einer Bodenplatte 11 und einer beabstandet davon angeordneten Halterung 12, steht durch den teleskopierbaren Arm 20 mit dem Schrank oder Schrankteil 1 in Verbindung. Die Halterung 12 besitzt einzelne Bohrungen 12a, in denen die einzelnen Gewürzdosen 16 stehen. Die Ausnehmung 2 in dem Schrank oder Schrankteil 1 ist in der Größe gewählt, dass durch die Ausnehmung die Aufnahme 10 sowohl in der Höhe, als auch in der seitlichen Erstreckung vollständig aufgenommen werden kann. Das heißt, dass die Bodenplatte 11 den Abschluss bzw. den Verschluss der Ausnehmung 2 des Schrankteiles bildet, wenn die Aufnahme in dem Schrankteil verschwunden ist. In dem teleskopierbaren Arm 20 befindet sich beispielsweise einen Gasfeder, um die Aufnahme, beispielsweise in der Ausbildung als Gewürzständer in das Schrankteil einzuführen bzw. herauszuholen.

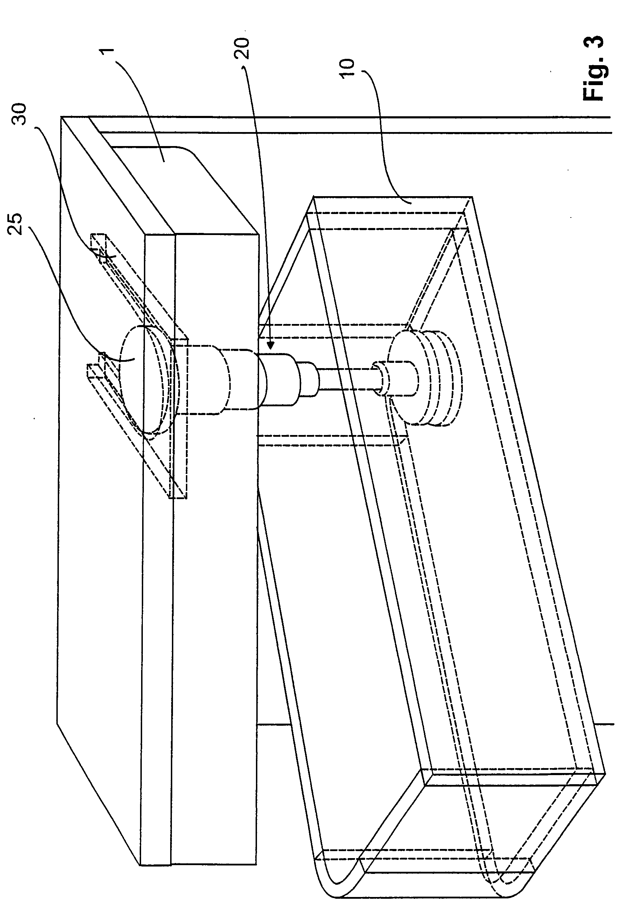

Die Ausführungsform gemäß der Fig. 3 unterscheidet sich von der gemäß Fig. 1 dadurch, dass an dem Arm 20 eine Aufnahme 10 nach Art eines Tabletts mit Boden und Seitenwänden angebracht ist, deren Form so gestaltet sein kann, dass diese an die Form des Schrankes 1 angepasst ist. Auf dem Tablett 10 stehen die einzelnen Dosen oder ähnlichen Gegenstände. Erkennbar ist insbesondere aus der Fig. 3, in welcher Weise der teleskopierbare Arm 20 am Schrank 1 befestigt ist. Hierzu ist eine Einschubführung 30 vorgesehen, die den Teller 25 des telekopierbaren Armes aufnimmt. Der Teller 25 ist in der Einschubführung 30 derart fixierbar, dass dieser nicht herausrutschen kann. Dies kann beispielsweise durch Klemmschrauben erfolgen.

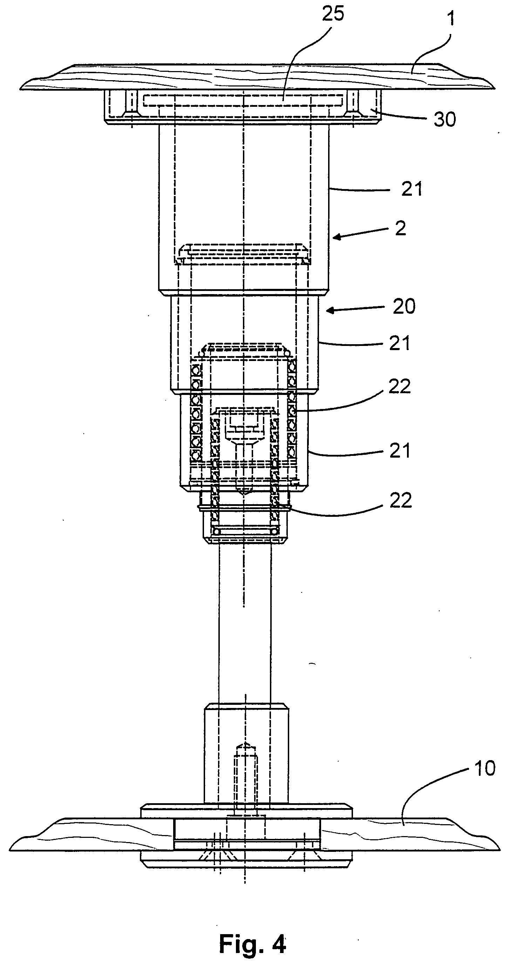

Bei der Darstellung gemäß Fig. 4 ist der teleskopierbare Arm 20 im Schnitt erkennbar, der aus einzelnen Teleskopelementen 21 besteht, die gegeneinander durch Kugellagerkäfige 22 geführt sind. Der Grund hierfür ist darin zu finden, dass bei Belastung der Aufnahme 10 ohne eine derartige Führung die Gefahr der Verkantung bestünde. Bei der Fig. 4 ist der Teleskoparm 20 aus der Fig. 3 dargestellt. In gleicher Weise gilt diese Ausbildung allerdings auch für den Teleskoparm gemäß den Fig. 1 und 2.

## Patentansprüche

1. Vorrichtung zur Aufnahme von Dosen, insbesondere Gewürzdosen, Gläsern und ähnlichen Teilen aus Küche und Bad,
**gekennzeichnet durch**
eine tablettartige Aufnahme (10), wobei die Aufnahme (10) mit einem in einem Schrank oder Schrankteil (1) angeordneten verlängerbaren, insbesondere teleskopierbaren Arm (20) in Verbindung steht.

2. Vorrichtung nach Anspruch 1,
**dadurch gekennzeichnet,**
**dass** die Aufnahme (10) durch den Schrank (1) oder das Schrankteil (1) aufnehmbar ist.

3. Vorrichtung nach Anspruch 1,
**dadurch gekennzeichnet,**
**dass** die Aufnahme (10) an den Schrank oder das Schrankteil ansetzbar ist.

4. Vorrichtung nach Anspruch 1,
**dadurch gekennzeichnet,**
**dass** die Aufnahme (10) als Gewürzständer ausgebildet ist.

5. Vorrichtung nach Anspruch 4,
**dadurch gekennzeichnet,**
**dass** der Gewürzständer (10) eine Bodenplatte (11) und davon nach oben beabstandet eine Halterung (12) mit Bohrungen (12a) zur Aufnahme der Gewürzdosen aufweist.

6. Vorrichtung nach Anspruch 1,
**dadurch gekennzeichnet,**
**dass** die Aufnahme (10) drehbar an dem Arm (20) angeordnet ist.

7. Vorrichtung nach Anspruch 1,
**dadurch gekennzeichnet,**
**dass** der verlängerbare Arm (20) eine Hubvorrichtung aufweist.

8. Vorrichtung nach Anspruch 7,
**dadurch gekennzeichnet,**
**dass** die Hubvorrichtung als Gasfeder (nicht dargestellt) ausgebildet ist.

9. Vorrichtung nach Anspruch 1,
**dadurch gekennzeichnet,**
**dass** der teleskopierbare Arm (20) einzelne Teleskopelemente (21) aufweist, die durch Führungselemente (22) miteinander in Verbindung stehen.

10. Vorrichtung nach Anspruch 9,
**dadurch gekennzeichnet,**
**dass** die Führungselemente (22) als Kugellagerkäfige ausgebildet sind.
